# EUROPEAN PATENT APPLICATION

(11) **EP 3 633 630 A1**
(43) Date of publication of application: **08.04.2020**
(21) Application number: 19209509.9
(22) Date of filing: 14.10.2015
(51) Int. Cl.: G06T 19/20, G06T 11/20, G06T 13/80

(54) **ANIMATION FRAMEWORK**

(30) Priority: 14.10.2014 US 201462063741 P; 09.04.2015 US 201514683100
(62) Divisional of application: 15785012.4
(71) Applicant: Microsoft Technology Licensing, LLC, Redmond, WA 98052-6399 (US)
(72) Inventor: ALLYN, Barry Christopher, Redmond, WA 98052-6399 (US)
(74) Representative: Grünecker Patent- und Rechtsanwälte PartG mbB

(57) **Abstract**

An animation framework for animating arbitrary changes in a visualization via morphing of geometries is provided. Geometry from a visualization is captured from before and after a change to the visualization, which is used to generate a series of frames to provide a smooth morphing animation of the change to the visualization. Transitional geometry representing a merged state between the initial geometry and the final geometry of the visualization is generated to build frames between the initial frame and the final frame. The morphing animation may be governed by a timing curve and may be built according to a display rate to ensure a smooth animation.

## Description

### BACKGROUND

Data visualization is a process for graphically representing data in a visualization, for example, a chart, an infographic, a map, a gauge, etc. Clients leverage asynchronous animation platforms for optimal performance when rendering animated changes within a visualization, wherein the clients set properties on layers which are then animated to their final value on a separate thread. Synchronous, or 'dependent', animations often require tight loops running on the UI thread and are avoided because they can hang the client for short periods of time or may have low frame rates. However, synchronous animations are still required, for example, time series animations require a series to rebuild its underlying geometry as new data are pushed to it. Such a change cannot be approximated with a simple affine transformation (i.e., retaining relationships) performed in a compositor, therefore the client must write a dependent animation loop to redraw each frame. It is with respect to these and other considerations that examples will be made.

### SUMMARY

This summary is provided to introduce a selection of concepts in a simplified form that are further described below in the Detailed Description section. This summary is not intended to identify all features of the claimed subject matter, nor is it intended to limit the scope of the claimed subject matter.

Aspects of the present disclosure provide an animation framework for enabling animation of a change between any two visualization states via a morphing animation. According to an aspect, before, after, and intermediate output states of a visualization are captured into a storyboard object. Aspects allow for merged versions of the output states to be automatically computed and cached within the storyboard object. In various aspects, the storyboard enables the animation of the change be rendered via a loop using the same logic used to draw a static chart.

Examples may be implemented as a computer process, a computing system, or as an article of manufacture such as a computer program product or computer readable media. The computer program product may be a computer storage medium readable by a computer system and encoding a computer program of instructions for executing a computer process.

The details of one or more aspects are set forth in the accompanying drawings and description below. Other features and advantages will be apparent from a reading of the following detailed description and a review of the associated drawings. It is to be understood that the following detailed description is explanatory only and is not restrictive of other aspects of the present disclosure.

### BRIEF DESCRIPTION OF THE DRAWINGS

The accompanying drawings, which are incorporated in and constitute a part of this disclosure, illustrate various aspects of the present disclosure. In the drawings:
**FIGURE 1** illustrates a storyboard architecture for creating a morphing animation;
**FIGURE 2** illustrates an example of a morphing animation;
**FIGURE 3** illustrates a block diagram for an animation engine for providing morphing animations of changes to a visualization;
**FIGURE 4** illustrates a flow chart showing general stages involved in a method for providing the morphing animation of changes to a visualization;
**FIGURE 5** illustrates a block diagram illustrating example physical components of a computing device;
**FIGURES 6A** and **6B** illustrate block diagrams of a mobile computing device; and
**FIGURE 7** illustrates a block diagram of a distributed computing system.

### DETAILED DESCRIPTION

The following detailed description refers to the accompanying drawings. Wherever possible, the same reference numbers are used in the drawings and the following description to refer to the same or similar elements. While aspects of the disclosure may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the present disclosure, but instead, the proper scope of the disclosure is defined by the appended claims. Examples may take the form of a hardware implementation, or an entirely software implementation, or an implementation combining software and hardware aspects. The following detailed description is, therefore, not to be taken in a limiting sense.

Examples of the present disclosure are directed to providing an animation framework within a data visualization platform architecture via a storyboard of changes to the visualization. According to an aspect, the architecture enables building of a data visualization (e.g., a chart, an infographic, a map, a gauge, etc.) via a one-directional chain of separate stages, each stage having a simple input interface and output interface.

Visualizations (e.g., charts, graphs, infographics, gauges, maps, etc.) graphically represent data. According to aspects, the data are represented in the visualization by geometries specific to a given visualization type (e.g., by wedges in a pie chart, by columns in a bar graph, etc.) and the same data can be represented by different geometries in different visualization types. Other visualization elements (e.g., legends, titles, axes, etc.) are represented by their own geometries. According to aspects, these geometries are comprised of a limited set of primitives (e.g., lines, Bezier curves, etc.) which can be passed directly to an appropriate rendering Application Programming Interface (API). From these primitives, any geometry can be approximated. When a visualization changes type, for example, when a user changes a bar graph to a pie chart, the geometries also change.

Animating changes made to a visualization (e.g., a property change, a data change, showing elements within the visualization, hiding elements within the visualization, changing the visualization type, etc.) via a morphing animation is provided. For example, to help the user to semantically understand a transition, aspects provide for showing objects in a visualization in a previous state and then morphing into a new state. Any visualization change may be transitioned (i.e., is transitionable) via a morphing animation, which helps users to understand changes made to the visualization.

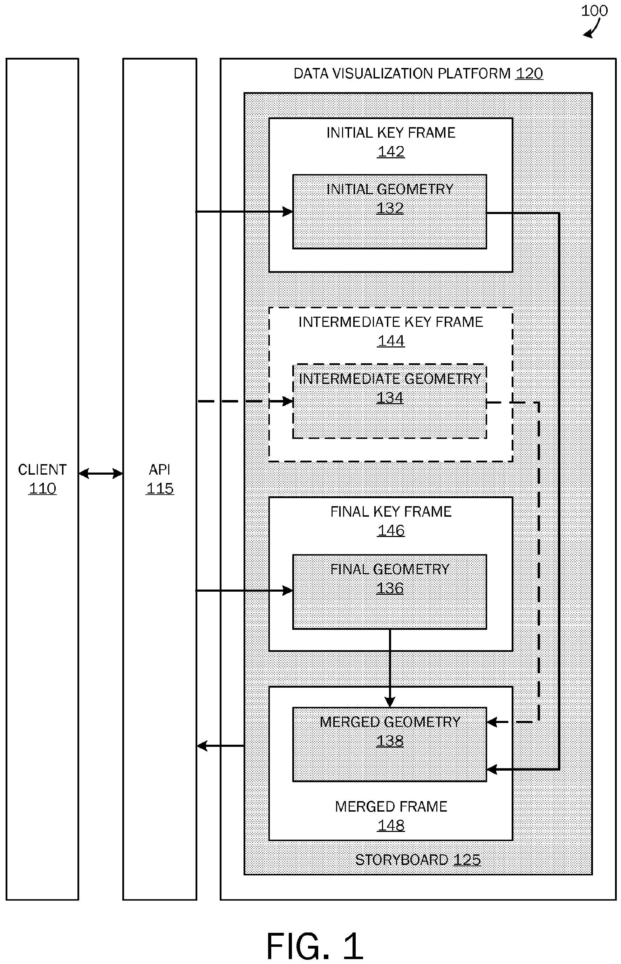

**FIGURE 1** illustrates a storyboard architecture **100** for creating a morphing animation. According to an aspect, the storyboard **125** acts as a logging mechanism or a recorder that captures the geometries **132, 134, 136** of output states from a visualization. In some aspects, the interface for the storyboard **125** is exposed to the client **110** providing the visualization via the data visualization platform API **115.**

According to aspects, snapshots of the geometries **132, 134, 136** are taken for the storyboard. In various aspects, these snapshots comprise a set of visualization elements (e.g., legend, visualization title, plot area, etc.), wherein each element comprises geometry primitives and properties (e.g., text, colors, dash patterns, etc.). For example, an initial snapshot geometry of initial geometry **132** comprises the visualization elements initially output when the recording of the change to be animated begins. According to aspects, snapshots are used to create key frames within the morphing animation.

For example, when the storyboard **125** is created, the initial geometry **132** is captured and cached within the storyboard **125** as an initial key frame **142.** As the client **110** modifies the visualization, the storyboard **125** is operable to optionally take snapshots (e.g., record) one or more intermediate geometries **134** (cached as one or more intermediate key frames **144**). Once all changes have been made, the final geometry **136** is captured and cached within the storyboard **125** as the final key frame **146.** The client **110** is then operable to choose to end the recording or to add additional changes, wherein the final key frame **146** will then be treated as an intermediate key frame **144** in an ongoing animation.

To create a morphing animation, geometry representative of transitional states between the snapshots is calculated. According to aspects, the data visualization platform **120** is operable to compute merged versions of the key frames by associating the geometries of each visualization element in one key frame with those in a sequential key frame. For example, when the client **110** is producing a multi-staged animation, the transitions are calculated between the initial key frame **142**, one or more intermediate key frames **144**, and the final key frame **146.** According to aspects, multiple merged frames **148** are created between each captured key frame **142, 144, 146** to produce a smooth animation, as the transitions between each key frame can be smaller when more merged frames **148** are calculated and displayed in a given time. According to another aspect, the storyboard **125** is operable to throttle the creation of merged frames **148** such that no more merged frames **148** are calculated than are needed to generate an animation at a target Frames per Second (FPS) rate (e.g., no more than 30 merged frames **148** are produced for display for a 1 second animation set for 30 FPS).

The data visualization platform **120** is operable to logically associate objects, geometry figures, and geometry primitives in the visualization between consecutive key frames **142, 144, 146.** According to an aspect, the initial geometry **132** and the final geometry **136** are matched in the following priority order, which represents containment/nesting order: chart element (by chart element pointer); chart element properties (by property identification); chart element data point geometry figure (by data point index); chart element non-data point geometry figure (by ordinal position); and chart element geometry figure segment (by ordinal position). According to another aspect, the initial geometry **132** and the final geometry **136** may be matched via aligning runs of lines and Bezier clusters to prevent deformations when animating. For example, a run of five lines (or Beziers) in the initial state may be aligned with a run of more or fewer lines (or Beziers) in the final state. Other matching orders are possible in other aspects, including user defined matches.

Merged geometry **138** is used to produce merged frames **148** in various aspects. According to an aspect, the merged geometry **138** is a collection of geometries that have the before and after output states of each vertex position for each primitive (e.g., lines, Beziers, etc.). According to various aspects, merged geometry **138** is recorded as a pair of primitives (e.g., {initial, final}) that are used to calculate merged frames **148** in a continuous stream. According to an aspect, once the merged frames **148** are calculated, they are cached within the storyboard **125** according to a timeline, so that the transitional states represented by the merged frames **148** can be provided at any moment within the storyboard's timeline and with minimal or reduced computation. Aspects allow for merged frames **148** cached in the storyboard **125** to be provided sequentially according to the timeline to be rendered using the same logic as static image rendering.

According to some aspects, the initial key frame state **142** is discarded after the merged frames **148** are cached. According to some aspects, the final key frame **146** is preserved so that it can be used as the initial key frame **142** for a next morphing animation if the storyboard architecture **100** has not been closed (e.g., client **110** has not ended the recording).

According to various aspects, geometry primitives that exist in the before output state and the after output state will merge with each other, such that their endpoints are associated. If the types of merging primitives in a pair are dissimilar, aspects provide for an appropriate conversion will be made during the animation. For example, when transitioning between an initial line and a final Bezier, the line will be converted to a Bezier curve and merged, which may include adding additional {initial, final} pairs to the line for any Bezier control points added by the conversion.

In various examples, each object may or may not exist in the before or after output states of a visualization, (e.g., the object was added or removed as part of the change made to the visualization). According to aspects, various rules are applied to handle the association of merged geometries **138** for elements that are removed or added. For example, visualization elements that are added will have an initial value of null and will be animated as a fade-in by altering the alpha channel of all color properties (e.g., line, fill, text, etc.) during interpolation. In a contrasting example, elements that are removed will have a final value of null and will be animated as a fade-out by altering the alpha channel of all color properties (e.g., line, fill, text, etc.) during interpolation. As another example, elements that are added will either 'explode' from a center point or will originate from a neighboring element, depending on a preconfigured policy based on the type of the visualization element. In further contrast, elements that are removed will either 'implode' to a center point or will 'fold into' a neighboring element, depending on a preconfigured policy based on the type of the visualization element. As yet another example, primitives that are added will emanate from a neighboring primitive's endpoint, thereby causing it to appear to "grow" from zero length to its final length. In yet further contrast, primitives that are removed will "fold into" a neighboring primitive's endpoint, thereby causing it to disappear as it shrinks to zero length.

Once the storyboard **125** is finalized, it is operable to be transmitted to the client **110** animating the change. According to aspects, the client **110** writes an animation loop that iterates the frames for a specified duration (e.g., 1 second, 0.5 seconds, etc.). According to aspects, during each iteration of the animation loop, the client **110** specifies to the storyboard **125** which point within the storyboard's timeline should be rendered. According to aspects, the client **110** is able to render the frame at the specified point on the timeline using the same code/logic used to draw a static chart.

According to several aspects, the visualization is associated with a storyboard **125**, which enable the visualization to redirect its rendering from the geometry stored in the visualization (which is in its final state) to the merged geometry **138** in the storyboard's merged frames **148.** Aspects that associate a storyboard **125** and a visualization enable the client **110** to reuse the rendering logic of a static visualization, and add an animation loop that specifies where in the storyboard's timeline the visualization is to be rendered. Various aspects allow the storyboard **125** to be discarded or used again for repeated playback once the animation loop has completed.

According to aspects, the client 110 is operable to use a custom timing curve when using a storyboard **125.** In various aspects a timing curve may be linear or non-linear, and specify the position or properties of various elements at a given point in the duration of the animation. Aspects of a timing curve enable the client **110** to specify where along the storyboard's timeline a given element or property is to be provided from and how quickly the next iteration of the element is provided. For example, a linear timing curve for an element moving from the left boundary of a visualization to the right will move the element at a constant rate, such that, at n% of the duration the element is provided at n% of the journey to the right, (where n is an arbitrary number between 0 and 100). In contrast, a non-linear timing curve (e.g., a Bezier), is operable to provide rendering of the element as though it accelerates and moves at different rates from the initial key frame **142** to the final key frame **146.** Similarly, aspects allow for timing curves to be applied to the non-positional properties of an element (e.g., text, colors, dash patterns, etc.).

The storyboard architecture **100** is operable to enable morphing animations for several animation types. For example, animations to interactively zoom into data, interactively pan across a visualization, time animations of changes to data series, "stock ticker" style animations, animations of changes in style or formatting of a visualization, etc.

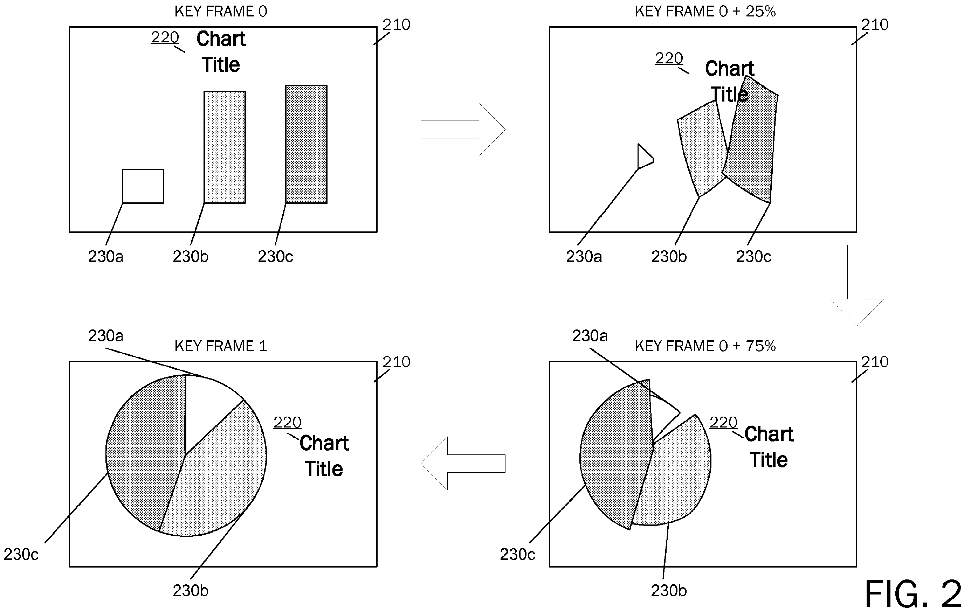

**FIGURE 2** illustrates an example of a morphing animation. In the illustrated example, a storyboard **125** records two changes to a chart **210**: (1) moving the chart title **220** from the top edge to the right edge of the chart **210**, and (2) switching from a column chart to a pie chart visualization type. The visualization elements **230a-c** graphically represent data, and are illustrated as morphing when the visualization type. The illustrated frames include key frame 0 (initial key frame **142**), key frame 1 (final key frame **146**), and two merged frames **148** selected at key frame 0+25% along the storyboard's timeline (first merged frame **148**) and at key frame 0+75% along the storyboard's timeline (second merged frame **148**). As will be appreciated, more or fewer frames can be used than are illustrated herein.

According to an aspect, the animation illustrated in **FIGURE 2** is rendering according to a timing curve, wherein each frame is displayed via the client **110** in sequential order for a period of time specified by a timing curve. A timing curve specifies where in the storyboard's timeline that merged geometries **138** are selected from for display. For example, when using a linear timing curve, keyframe 0+25% (first merged frame **148**) is rendered by the client **110** at 25% of the morphing animation's duration, but when using a non-linear timing curve, keyframe 0+25% (first merged frame **148**) may be rendered at a different point of the animation's duration (e.g., 30%, 50%, 80%, etc.).

Aspects enable timing curves to be applied to all of the geometry in a merged frame **148** or to individual elements. In one example, merged frames **148** are cached in a storyboard **125** and rendered via element-specific timing curves. An element-specific timing curve is operable to be applied to a shared object (e.g., chart title **220**) to an element representing a data series (e.g., visualization element **230a**) or to multiple shared objects and visualization elements. Continuing the example, when rendering the morphing animation via element specific timing curves, where the chart title **220** is animated according to a faster timing curve than the visualization elements **230a-c,** at the halfway point of the morphing animation, the merged geometry **138** are provided from second merged frame **148** for chart title **220**, but from first merged frame **148** for visualization elements **230a-c.**

According to aspects, once the change animation concludes, whether for an element or an entire visualization, the final geometry **136** remains displayed in the visualization until another change is applied or the visualization is no longer displayed (e.g., a user closes the client **110,** etc.).

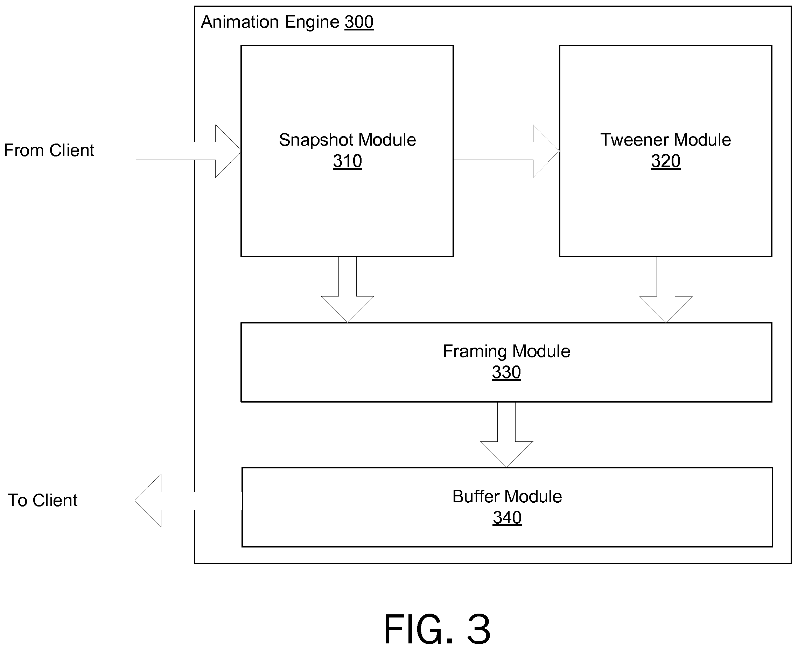

**Figure 3** illustrates a block diagram for an animation engine **300** for providing morphing animations of changes to a visualization. The animation engine **300** is illustrated as inclduing a snapshot module **310**, operable to capture and cache geometries in response to a change in the visualization, a tweener module **320**, operable to generate merged geometry **138** representative of geometry "in between" the captured geometry, and a framing module **330**, operable to generate frames representative of the captured and generated geometries, and buffer module **340**, operable to store and order the frames for later rendering.

According to aspects, the snapshot module **310** is operable to capture and cache geometries that are used to represent the data in a visualization. As will be understood, the geometry can be retrieved from the client **110** or from a module of the data visualization platform **120** used to produce or transmit the geometry for the client **100.** As will also be understood, geometries may be produced to represent the visualization as a whole, or may be produced to represent individual data series in the visualization (e.g., visualization elements **230** representing individual data series, shared objects (e.g., axes, titles, legends, etc.), etc.).

Geometry captured and cached from an initial state, final state, and any intermediate states of the visualization (i.e., initial geometry **132**, final geometry **136**, and intermediate geometry **134**, respectively) are passed to framing module **330** to create frames representative of the geometries (i.e., initial key frame **142**, final key frame **146**, and intermediate key frame **144**, respectively). The capture geometry is also passed to tweener module **320.**

According to aspects, tweener module **320** is operable to generate merged geometry **138** representative of geometry "in between" the captured geometry. According to aspects, the tweener module **320** uses logic to associate objects in the initial stage with objects in the final stage to determine which initial geometry **132** to morph into which final geometry **136**, so that individual data points morph to the same data point in their final output states. According to an aspect, an association between the geometries to-be-merged is made via annotations within the geometries. By examining the data or data series bound to each geometry, by user input, etc.

According to aspects, the tweener module **320** is operable create merged geometry **138** for objects that are added or removed from the visualization (i.e., are not displayed in a key frame). Several aspects enable the tweener module **320** to use arbitrary geometry for the stage that the object is missing in, so that the object is, for example, faded in/out, grown/shrunk via an arbitrary point, merged/split via common geometry shared with a neighboring element, etc.

According to aspects, a timing curve is specified by the client **110** to dictate how geometry changes in between the captured geometries. For example, a linear timing curve specifies that affected elements within a visualization change at a steady pace throughout the morphing animation, such that an element at the midpoint of the timing curve has merged geometry **138** half-way between its initial geometry **132** and its final geometry **136.** In alternate examples, Bezier timing curves allow for objects to animate at different start times and to change between the initial geometry **132** and final geometry **136** at different rates.

According to aspects, when using captured intermediate geometry **134** to create merged geometry **138**, the tweener module **320** is operable to use the same or separate timing curves between each key frame's geometry. For example, to animate a pie chart (initial geometry **132**) morphing into a column chart (final geometry **136**), an intermediate stage of an exploded pie chart (i.e., a pie chart in which the wedges representing data series do not touch) may be specified to be captured as intermediate geometry **134.** Accordingly, the "explosion" from the initial stage to the intermediate stage may be animated according to a linear curve and the chart type transition from the intermediate stage to the final stage may be animated according to a Bezier curve. Those skilled in the art will recognize several combinations of shared/separate timing curves are possible and that the illustrated example is but one possible implementation.

According to an aspect, the tweener module **320** is operable to synthesize a number of merged geometries **138**, wherein the number is based on an animation duration and an FPS rate specified by the client **110.** According to other aspects, when providing an animation for a "live" change, the tweener module **320** is operable to synthesize merged geometries **138** at a steady rate as close as possible to the specified FPS rate. For example, associated merged geometries **138** and frames **148** must be synthesized at least every 16.67 ms to meet 60 FPS, but if the time to synthesize the associated merged geometries **138** and frames **148** exceeds 16.67 ms, the tweener module **320** is operable to set the FPS rate to the highest rate at which merged geometries **138** and frames **148** can be steadily synthesized, wherein the rate of production does not substantially change during the course of providing the morphing animation. According to another aspect, no more merged geometry **138** (and thereby merged frames **148**) than are needed for the specified playback rate are synthesized (e.g., for a 1 s animation at 60 FPS, no more than 60 distinct merged geometries **138** are needed).

According to an aspect, tweener module **320** is operable to retain the final geometry **136** for use as an initial geometry **132** in a subsequent animation.

The merged geometries are passed to framing module **330** to create representative frames. The frames are then passed from the framing module **330** to the buffer module **340**, where the frames are ordered and stored for later rendering as part of a morphing animation. According to aspects, when a "live" change is animated, no more than one merged frame **148** is stored in the buffer, so that merged frames **148** are passed to a client **110** as they are generated, within the bounds of the FPS rate. The frames are renderable by the client **110** using the same logic to render a static image. According to an aspect, because the client **110** has already rendered the initial key frame **142** (i.e., it is displaying the visualization having the initial geometry **132** when the change is initiated), buffer module **340** is operable to discard the initial key frame **142.**

According to an aspect, the buffer module **340** provides a swapchain buffer having multiple sub-buffers so that frames are generated independently of screen rendering, thereby providing smooth animation. According to aspects, a swapchain buffer serves as a throttling mechanism for the framing module **330** so that more frames than are necessary to achieve a target FPS rate are not created.

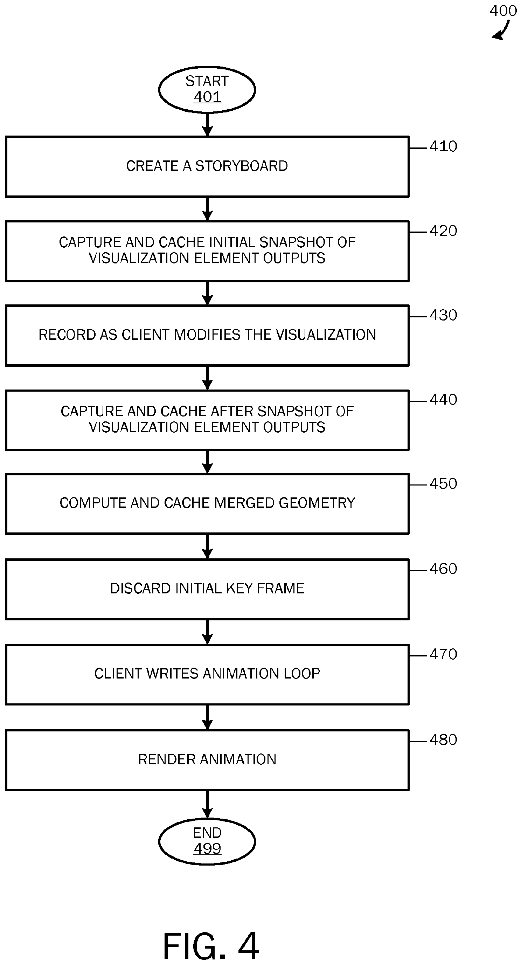

**FIGURE 4** is a flow chart showing general stages involved in a method **400** for providing the morphing animation of changes to a visualization. Method **400** begins at starting block **401** and proceeds to OPERATION **410** where a storyboard **125** is created.

The method **400** proceeds to OPERATION **420**, where the initial snapshot of the visualization element outputs (including initial geometry **132**) is captured and cached within the storyboard **125** as the initial key frame **142.** As described above, in aspects, the visualization element outputs comprise geometry and properties.

From OPERATION **420**, the method **400** proceeds to OPERATION **430**, where the client **110** makes changes to the visualization. For example, the visualization type may be changed from a column chart to a pie chart, as shown in **FIGURE 2** or the values of data represented as visualization elements **230** may have changed. In aspects, the storyboard **125** optionally records one or more intermediate output states and caches the output states as one or more intermediate key frames **144.**

Once the changes have been made, method **400** proceeds to OPERATION **440**, where an after snapshot of the outputs (including final geometry **136**) is captured and cached within the storyboard **125** as the final key frame **146.**

The method **400** proceeds to OPERATION **450**, where a merged version of the outputs (including merged geometry **138**) is computed that, according to aspects, combines and associates the initial output state and the final output state (or between any intermediate output states in sequence) of each chart element. As described above, in aspects, each chart element is broken down to primitives, and the merged geometry **138** comprises a pair of values {initial, final} of the primitives.

At OPERATION **460**, the initial key frame **142** is discarded, and at OPERATION **470**, the client **110** writes an animation loop specifying which points within the storyboard's timeline the visualization should be rendered. As described above, in aspects, the client **110** can include timing curves for the animation(s), which may be platform-specific. Merged frames **148** are created corresponding to the merged geometry **138** at the specified points within the storyboard's timeline. According to aspects, the number of points specified is bounded by an FPS rate for the animation specified by the client **110**, such that the time needed to create the merged frames **148** does not exceed the playback timing (e.g., for a playback rate of 60 FPS, frames are timed for playback every 16.67 ms). According to another aspect, no more frames than are needed for the specified playback rate are created (e.g., for a 1 s animation at 60 FPS, no more than 60 frames are needed).

The method **400** proceeds to OPERATION **480**, where the animation of the visualization change is rendered by replaying the storyboard **125.** The method **400** concludes at END **499.**

While the present disclosure has been described in the general context of program modules that execute in conjunction with an application program that runs on an operating system on a computer, those skilled in the art will recognize that the disclosure may also be implemented in combination with other program modules. Generally, program modules include routines, programs, components, data structures, and other types of structures that perform particular tasks or implement particular abstract data types.

The aspects and functionalities described herein may operate via a multitude of computing systems including, without limitation, desktop computer systems, wired and wireless computing systems, mobile computing systems (e.g., mobile telephones, netbooks, tablet or slate type computers, notebook computers, and laptop computers), hand-held devices, multiprocessor systems, microprocessor-based or programmable consumer electronics, minicomputers, and mainframe computers.

In addition, the aspects and functionalities described herein may operate over distributed systems (e.g., cloud-based computing systems), where application functionality, memory, data storage and retrieval and various processing functions may be operated remotely from each other over a distributed computing network, such as the Internet or an intranet. User interfaces and information of various types may be displayed via on-board computing device displays or via remote display units associated with one or more computing devices. For example, user interfaces and information of various types may be displayed and interacted with on a wall surface onto which user interfaces and information of various types are projected. Interaction with the multitude of computing systems with which aspects of the disclosure may be practiced include, keystroke entry, touch screen entry, voice or other audio entry, gesture entry where an associated computing device is equipped with detection (e.g., camera) functionality for capturing and interpreting user gestures for controlling the functionality of the computing device, and the like.

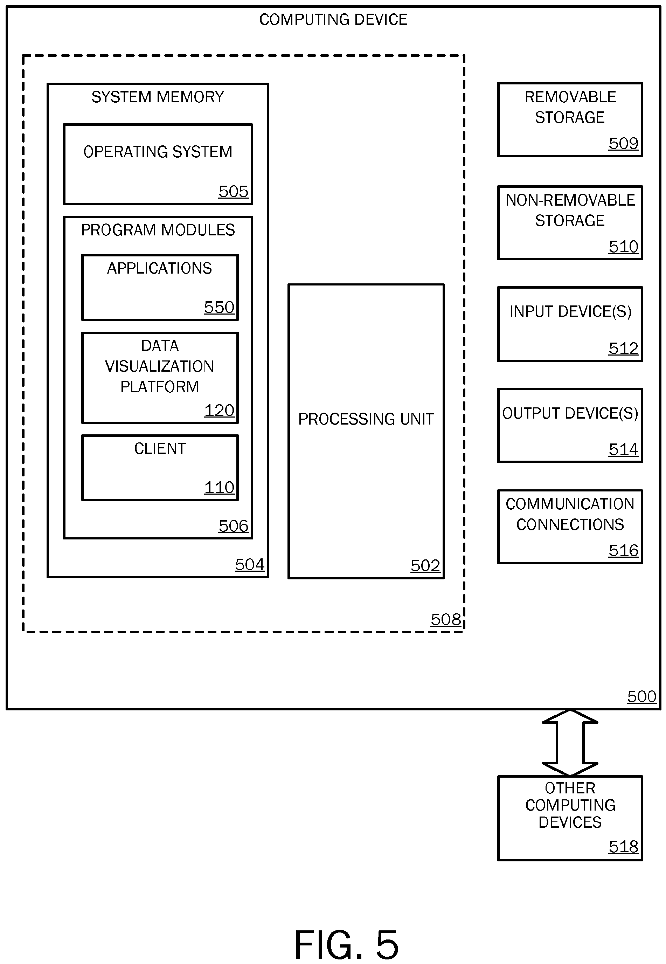

**FIGURES 5-7** and the associated descriptions provide a discussion of a variety of operating environments in which examples of the disclosure may be practiced. However, the devices and systems illustrated and discussed with respect to **FIGURES 5-7** are for purposes of example and illustration and are not limiting of a vast number of computing device configurations that may be utilized for practicing aspects of the disclosure, described herein.

**FIGURE 5** is a block diagram illustrating physical components (i.e., hardware) of a computing device **500** with which examples of the present disclosure may be practiced. The computing device components described below may be suitable for the client device described above. In a basic configuration, the computing device **500** may include at least one processing unit **502** and a system memory **504.** Depending on the configuration and type of computing device, the system memory **504** may comprise, but is not limited to, volatile storage (e.g., random access memory), non-volatile storage (e.g., read-only memory), flash memory, or any combination of such memories. The system memory **504** may include an operating system **505** and one or more programming modules **506** suitable for running software applications **550**, such as client **110.** According to an aspect, the system memory **504** may include the data visualization platform **120.** The operating system **505**, for example, may be suitable for controlling the operation of the computing device **500.** Furthermore, aspects of the disclosure may be practiced in conjunction with a graphics library, other operating systems, or any other application program and is not limited to any particular application or system. This basic configuration is illustrated in **FIGURE 5** by those components within a dashed line **508.** The computing device **500** may have additional features or functionality. For example, the computing device **500** may also include additional data storage devices (removable and non-removable) such as, for example, magnetic disks, optical disks, or tape. Such additional storage is illustrated in **FIGURE 5** by a removable storage device **509** and a non-removable storage device **510.**

As stated above, a number of program modules and data files may be stored in the system memory **504.** While executing on the processing unit **502**, the program modules **506** (e.g., client **110**, data visualization platform **120**) may perform processes including, but not limited to, one or more of the stages of the method **400**, illustrated in **FIGURE 4****.** Other program modules that may be used in accordance with examples of the present disclosure and may include applications such as electronic mail and contacts applications, word processing applications, spreadsheet applications, database applications, slide presentation applications, drawing or computer-aided application programs, etc.

Furthermore, examples of the disclosure may be practiced in an electrical circuit comprising discrete electronic elements, packaged or integrated electronic chips containing logic gates, a circuit utilizing a microprocessor, or on a single chip containing electronic elements or microprocessors. For example, examples of the disclosure may be practiced via a system-on-a-chip (SOC) where each or many of the components illustrated in **FIGURE 5** may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, may be operated via application-specific logic integrated with other components of the computing device **500** on the single integrated circuit (chip). Examples of the present disclosure may also be practiced using other technologies capable of performing logical operations such as, for example, AND, OR, and NOT, including but not limited to mechanical, optical, fluidic, and quantum technologies. In addition, aspects of the disclosure may be practiced within a general purpose computer or in any other circuits or systems.

The computing device **500** may also have one or more input device(s) **512** such as a keyboard, a mouse, a pen, a sound input device, a touch input device, etc. The output device(s) **514** such as a display, speakers, a printer, etc. may also be included. The aforementioned devices are examples and others may be used. The computing device **500** may include one or more communication connections **516** allowing communications with other computing devices **518.** Examples of suitable communication connections **516** include, but are not limited to, RF transmitter, receiver, or transceiver circuitry; universal serial bus (USB), parallel, or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory **504**, the removable storage device **509**, and the non-removable storage device **510** are all computer storage media examples (i.e., memory storage.) Computer storage media may include RAM, ROM, electrically erasable programmable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device **500.** Any such computer storage media may be part of the computing device **500.** Computer storage media does not include a carrier wave or other propagated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

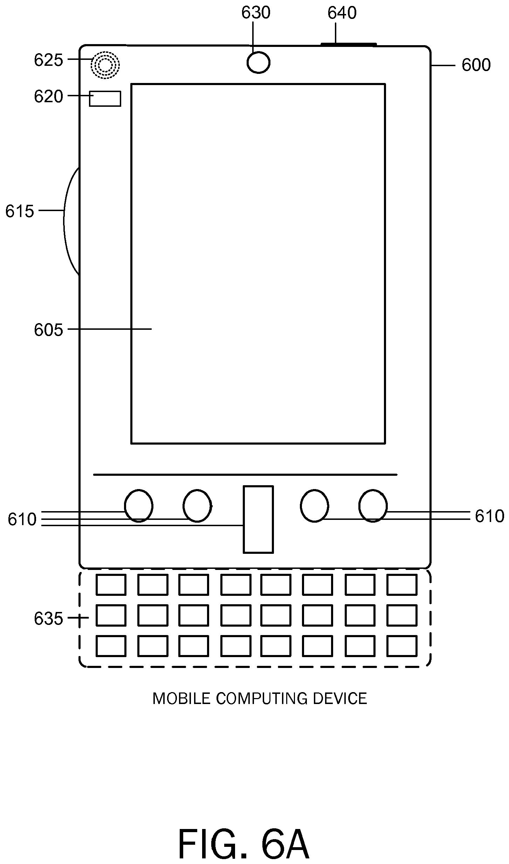

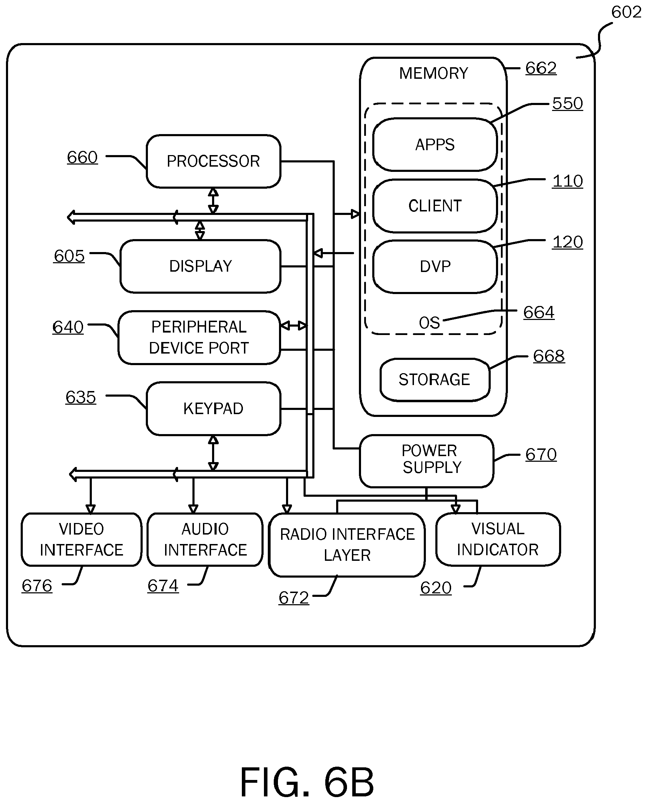

**FIGURES 6A** and **6B** illustrate a mobile computing device **600**, for example, a mobile telephone, a smart phone, a tablet personal computer, a laptop computer, and the like, with which aspects of the disclosure may be practiced. With reference to **FIGURE 6A****,** an example of a mobile computing device **600** for implementing the aspects is illustrated. In a basic configuration, the mobile computing device **600** is a handheld computer having both input elements and output elements. The mobile computing device **600** typically includes a display **605** and one or more input buttons **610** that allow the user to enter information into the mobile computing device **600.** The display **605** of the mobile computing device **600** may also function as an input device (e.g., a touch screen display). If included, an optional side input element **615** allows further user input. The side input element **615** may be a rotary switch, a button, or any other type of manual input element. In alternative examples, mobile computing device **600** may incorporate more or less input elements. For example, the display **605** may not be a touch screen in some examples. In alternative examples, the mobile computing device **600** is a portable phone system, such as a cellular phone. The mobile computing device **600** may also include an optional keypad **635.** Optional keypad **635** may be a physical keypad or a "soft" keypad generated on the touch screen display. In various aspects, the output elements include the display **605** for showing a graphical user interface (GUI), a visual indicator **620** (e.g., a light emitting diode), or an audio transducer **625** (e.g., a speaker). In some examples, the mobile computing device **600** incorporates a vibration transducer for providing the user with tactile feedback. In yet another example, the mobile computing device **600** incorporates peripheral device ports **640**, such as an audio input (e.g., a microphone jack), an audio output (e.g., a headphone jack), and a video output (e.g., a HDMI port) for sending signals to or receiving signals from an external device.

**FIGURE 6B** is a block diagram illustrating the architecture of one example of a mobile computing device. That is, the mobile computing device **600** can incorporate a system (i.e., an architecture) **602** to implement some examples. In one example, the system **602** is implemented as a "smart phone" capable of running one or more applications (e.g., browser, e-mail, calendaring, contact managers, messaging clients, games, and media clients/players). In some examples, the system **602** is integrated as a computing device, such as an integrated personal digital assistant (PDA) and wireless phone.

One or more application programs **550**, for example, client **110**, may be loaded into the memory **662** and run on or in association with the operating system **664.** Examples of the application programs include phone dialer programs, e-mail programs, personal information management (PIM) programs, word processing programs, spreadsheet programs, Internet browser programs, messaging programs, and so forth. According to an aspect, the data visualization platform **120** may be loaded into memory **662.** The system **602** also includes a non-volatile storage area **668** within the memory **662.** The non-volatile storage area **668** may be used to store persistent information that should not be lost if the system **602** is powered down. The application programs **550** may use and store information in the non-volatile storage area **668**, such as e-mail or other messages used by an e-mail application, and the like. A synchronization application (not shown) also resides on the system **602** and is programmed to interact with a corresponding synchronization application resident on a host computer to keep the information stored in the non-volatile storage area **668** synchronized with corresponding information stored at the host computer. As should be appreciated, other applications may be loaded into the memory **662** and run on the mobile computing device **600.**

The system **602** has a power supply **670**, which may be implemented as one or more batteries. The power supply **670** might further include an external power source, such as an AC adapter or a powered docking cradle that supplements or recharges the batteries.

The system **602** may also include a radio **672** that performs the function of transmitting and receiving radio frequency communications. The radio **672** facilitates wireless connectivity between the system **602** and the "outside world," via a communications carrier or service provider. Transmissions to and from the radio **672** are conducted under control of the operating system **664.** In other words, communications received by the radio **672** may be disseminated to the application programs **550** via the operating system **664**, and vice versa.

The visual indicator **620** may be used to provide visual notifications or an audio interface **674** may be used for producing audible notifications via the audio transducer **625.** In the illustrated example, the visual indicator **620** is a light emitting diode (LED) and the audio transducer **625** is a speaker. These devices may be directly coupled to the power supply **670** so that when activated, they remain on for a duration dictated by the notification mechanism even though the processor **660** and other components might shut down for conserving battery power. The LED may be programmed to remain on indefinitely until the user takes action to indicate the powered-on status of the device. The audio interface **674** is used to provide audible signals to and receive audible signals from the user. For example, in addition to being coupled to the audio transducer **625**, the audio interface **674** may also be coupled to a microphone to receive audible input, such as to facilitate a telephone conversation. The system **602** may further include a video interface **676** that enables an operation of an on-board camera **630** to record still images, video stream, and the like.

A mobile computing device **600** implementing the system **602** may have additional features or functionality. For example, the mobile computing device **600** may also include additional data storage devices (removable and non-removable) such as, magnetic disks, optical disks, or tape. Such additional storage is illustrated in **FIGURE 6B** by the non-volatile storage area **668.**

Data/information generated or captured by the mobile computing device **600** and stored via the system **602** may be stored locally on the mobile computing device **600**, as described above, or the data may be stored on any number of storage media that may be accessed by the device via the radio **672** or via a wired connection between the mobile computing device **600** and a separate computing device associated with the mobile computing device **600**, for example, a server computer in a distributed computing network, such as the Internet. As should be appreciated such data/information may be accessed via the mobile computing device **600** via the radio **672** or via a distributed computing network. Similarly, such data/information may be readily transferred between computing devices for storage and use according to well-known data/information transfer and storage means, including electronic mail and collaborative data/information sharing systems.

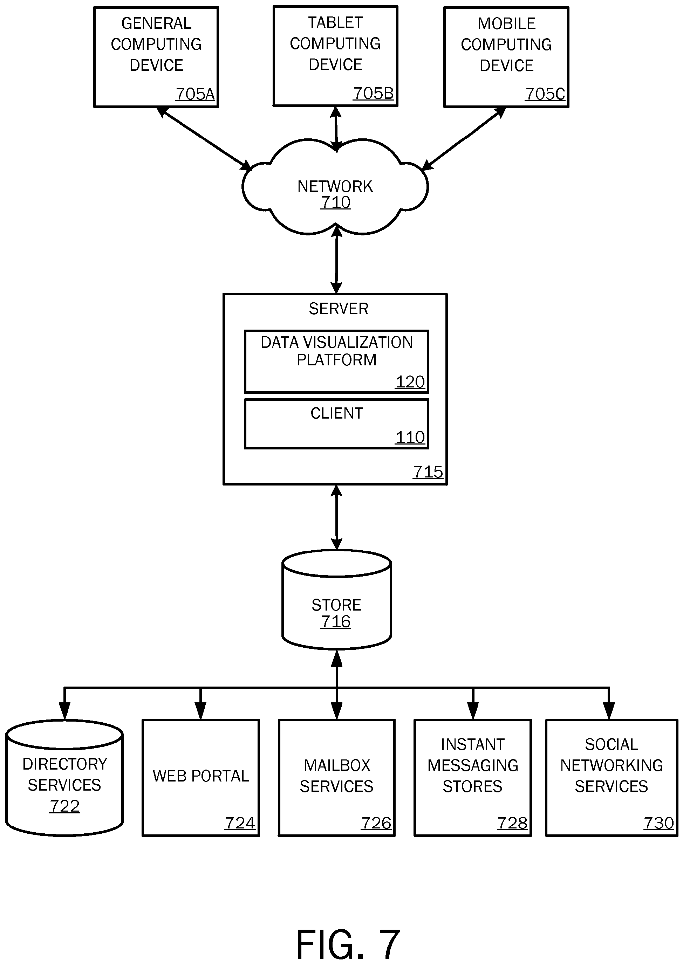

**FIGURE 7** illustrates one example of the architecture of a system for providing data visualization as described above. Content developed, interacted with, or edited in association with the client **110** or data visualization platform **120** may be stored in different communication channels or other storage types. For example, various documents may be stored using a directory service **722**, a web portal **724**, a mailbox service **726**, an instant messaging store **728**, or a social networking site **730**. The client **110** or data visualization platform **120** may use any of these types of systems or the like for providing data visualization, as described herein. A server **715** may provide the client **110** or data visualization platform **120** to clients **705A-C.** As one example, the server **715** may be a web server providing the client **110** or data visualization platform **120** over the web. The server **715** may provide the client **110** or data visualization platform **120** over the web to clients **705** through a network **710.** By way of example, the client computing device may be implemented and embodied in a personal computer **705A,** a tablet computing device **705B** or a mobile computing device **705C** (e.g., a smart phone), or other computing device. Any of these examples of the client computing device may obtain content from the store **716.**

Aspects of the present disclosure, for example, are described above with reference to block diagrams or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more examples provided in this application are not intended to limit or restrict the scope of the present disclosure in any way. The aspects, examples, and details provided in this application are considered sufficient to convey possession and enable others to make and use the best mode of present disclosure. The present disclosure should not be construed as being limited to any aspect, example, or detail provided in this application. Regardless of whether shown and described in combination or separately, the various features (both structural and methodological) are intended to be selectively included or omitted to produce an example with a particular set of features. Having been provided with the description and illustration of the present application, one skilled in the art may envision variations, modifications, and alternate examples falling within the spirit of the broader aspects of the general inventive concept embodied in this application that do not depart from the broader scope of the present disclosure.

### The following is a list of preferred embodiments of the invention:

Embodiment 1. A method for creating a morphing animation of a change to a visualization, comprising:
   taking an initial snapshot of geometries comprising the visualization before the change;
   taking a final snapshot of the geometries comprising the visualization after the change;
   caching the initial snapshot and the final snapshot;
   interpreting the cached snapshots to create merged geometries, wherein the merged geometries represent transitional states between the cached snapshots;
   synthesizing a plurality of frames renderable as static images to comprise the morphing animation, wherein the frames are generated based on the merged geometries; and
   transmitting the plurality of frames to a client to be rendered in the visualization, thereby providing the morphing animation of the change to the visualization.
Embodiment 2. The method of embodiment 1, further comprising:
   taking an intermediate snapshot of the geometries comprising the visualization during the change; and
   caching the intermediate snapshot.
Embodiment 3. The method of embodiment 1, wherein a final frame of the plurality of frames corresponds to the final snapshot, and the plurality of frames does not include a frame corresponding to the initial snapshot.
Embodiment 4. The method of embodiment 1, wherein generating the plurality of frames further comprises:
   receiving an animation loop, the animation loop including a duration and a Frames per Second (FPS) rate for playback of the morphing animation, wherein a number of frames of the plurality of frames synthesized does not exceed a number based on the duration and the FPS rate.
Embodiment 5. The method of embodiment 4, wherein the animating loop further includes a timing curve, wherein the timing curve specifies a rate at which the merged geometries illustrate the change from the initial geometry to the final geometry in the morphing animation.
Embodiment 6. The method of embodiment 1, wherein the snapshots and the plurality of frames are cached in a storyboard object, wherein the storyboard object is operable to provide repeated playback of the plurality of frames according to a timeline.
Embodiment 7. The method of embodiment 1, wherein an element of the geometries comprising the initial snapshot is associated with an element of the geometries comprising the final snapshot.
Embodiment 8. The method of embodiment 7, wherein an element of the geometries comprising the initial snapshot is not present in the final snapshot, further comprising:
   associating the element with an arbitrary geometry in the final snapshot; and
   wherein creating the merged geometries for the arbitrary geometry and the element includes at least one of:
      fading the element out as the morphing animation progresses;
      shrinking the element to the arbitrary geometry, wherein the arbitrary geometry is a point; and
      merging the element into the arbitrary geometry, wherein the arbitrary geometry is a neighboring element sharing common geometry with the element in the initial snapshot.
Embodiment 9. The method of embodiment 7, wherein an element of the geometries comprising the final snapshot is not present in the initial snapshot, further comprising:
   associating the element with an arbitrary geometry in the initial snapshot; and
   wherein creating the merged geometries for the arbitrary geometry and the element includes at least one of:
      fading the element in as the morphing animation progresses;
      growing the element from the arbitrary geometry, wherein the arbitrary geometry is a point; and
      splitting the element from the arbitrary geometry, wherein the arbitrary geometry is a neighboring element sharing common geometry with the element in the initial snapshot.
Embodiment 10. A system for creating a morphing animation of a change to a visualization, comprising:
   a processor; and
   a memory storage including instructions, which when executed by the processor are operable to provide:
      an animation engine operable to provide a morphing animation of a change to a visualization of data, the animation engine including:
      a grabber module, operable to respond to the change to the visualization by taking an initial snapshot of geometries comprising the visualization before the change and a final snapshot of the geometries comprising the visualization after the change;
      a tweener module, operable to receive the initial snapshot and the final snapshot from the grabber module, and interpret the snapshots to create merged geometries, wherein the merged geometries represent transitional states between the initial snapshot and the final snapshot;
      a framing module, operable to receive the merged geometries from the tweener module to generate a plurality of frames renderable by a client as static images to comprise the morphing animation, wherein the frames are generated based on the merged geometries; and
      a buffer module, operable to receive the plurality of frames from the framing module to store the plurality of frames and transmit the plurality of frames to the client to be rendered in the visualization, thereby providing the morphing animation of the change.
Embodiment 11. The system of embodiment 10, wherein the grabber module is further operable to take an intermediate snapshot of the geometries comprising the visualization during the change.
Embodiment 12. The system of embodiment 10, wherein the buffer module includes multiple sub-buffers, wherein the sub-buffers enable the framing module to generate the plurality of frames independently from the rendering of the visualization.
Embodiment 13. The system of embodiment 10, wherein the tweener module is further operable to receive a timing curve, wherein the tweener module applies the timing curve to set a rate of change from the initial geometries to the final geometries in the transitional states.
Embodiment 14. The system of embodiment 10, wherein the buffer module is further operable to store the plurality of frames in sequential order as a storyboard object, wherein the storyboard object is operable to provide repeated playback of the morphing animation of the change.
Embodiment 15. A computing device for creating a morphing animation, comprising:
   a processor; and
   a memory storage including instructions, which when executed by the processor are operable to:
      receive a timing curve, the timing curve including a duration of the morphing animation;
      receive a Frames per Second (FPS) rate at which a client will render the morphing animation;
      take an initial snapshot of geometries comprising the visualization before the change;
      take a final snapshot of the geometries comprising the visualization after the change;
      cache the initial snapshot and the final snap shot as key frames within a storyboard object;
      interpret the cached snapshots to create merged geometries, wherein the merged geometries represent transitional states between the cached snapshots, wherein the transitional states are determined according to the timing curve;
      generate a plurality of frames renderable as static images to comprise the morphing animation, wherein the frames are generated based on the merged geometries, and wherein a number of the plurality of frames does not exceed a number based on the duration and the FPS rate;
      cache the plurality of frames within the storyboard object according to a timeline; and
      transmit the storyboard object to the client to be rendered in the visualization, wherein the storyboard object is operable to provide repeated playback of the morphing animation of the change.

## Claims

1. A computer-implemented method for creating a morphing animation of a change to a visualization, comprising:
taking an initial snapshot of a geometry comprising the visualization before the change;
after receiving a modification to the visualization, taking an intermediate snapshot of an intermediate geometry comprising the visualization during the change;
taking a final snapshot of a final geometry comprising the visualization after the change;
based on the snapshots, creating a merged geometry;
receiving a timing curve specifying a rate at which the merged geometry illustrates the change to the visualization;
specifying as well positional and non-positional properties of various elements at a given point in a duration of the animation, wherein the plurality of frames differ from a frame corresponding to the initial snapshot; and
generating, based on the merged geometry, a plurality of frames renderable as static images to comprise the morphing animation.

2. The computer-implemented method of claim 1, further comprising rendering the plurality of frames in the visualization, thereby providing the morphing animation of the change to the visualization.

3. The computer-implemented method of claim 1 or 2, wherein generating the plurality of frames further comprises:
receiving an animation loop, the animation loop including a duration and a Frames per Second, FPS, rate for playback of the morphing animation, wherein a number of frames of the plurality of frames generated does not exceed a number based on the duration and the FPS rate.

4. The computer-implemented method of any of claims 1 to 3, wherein the snapshot and the plurality of frames are cached in a storyboard object, wherein the storyboard object is operable to provide repeated playback of the plurality of frames according to a timeline.

5. The computer-implemented method of any of claims 1 to 4, wherein an element of the geometry comprising the initial snapshot is associated with an element of the geometry comprising the final snapshot.

6. The computer-implemented method of claim 5, wherein an element of the geometry comprising the initial snapshot is not present in the final snapshot, further comprising:
associating the element with an arbitrary geometry in the final snapshot; and
wherein creating the merged geometry for the arbitrary geometry and the element includes at least one of:
fading the element out as the morphing animation progresses;
shrinking the element to the arbitrary geometry, wherein the arbitrary geometry is a point; and
merging the element into the arbitrary geometry, wherein the arbitrary geometry is a neighboring element sharing common geometry with the element in the initial snapshot.

7. The computer-implemented method of claim 5, wherein an element of the geometry comprising the final snapshot is not present in the initial snapshot, further comprising:
associating the element with an arbitrary geometry in the initial snapshot; and
wherein creating the merged geometry for the arbitrary geometry and the element includes at least one of:
fading the element in as the morphing animation progresses;
growing the element from the arbitrary geometry, wherein the arbitrary geometry is a point; and
splitting the element from the arbitrary geometry, wherein the arbitrary geometry is a neighboring element sharing common geometry with the element in the initial snapshot.

8. A system for creating a morphing animation of a change to a visualization, comprising:
a processor; and
a memory storage including instructions, which when executed by the processor are operable to provide:
an animation engine operable to provide a morphing animation of a change to a visualization of data, the animation engine including:
a grabber module, operable to respond to the change to the visualization by taking an initial snapshot of a geometry comprising the visualization before the change and a final snapshot of a final geometry comprising the visualization after the change, and further operable to take an intermediate snapshot of an intermediate geometry comprising the visualization during the change;
a tweener module, operable to receive the initial snapshot and the final snapshot from the grabber module, and to create a merged geometry based on the snapshots
a framing module, operable to:
receiving the merged geometry from the tweener module;
receiving a timing curve specifying a rate at which the merged geometry illustrates the change to the visualization;
specifying as well positional and non-positional properties of various elements at a given point in a duration of the animation, wherein the plurality of frames differ from a frame corresponding to the initial snapshot; and
generating a plurality of frames renderable by a client as static images to comprise the morphing animation.

9. The system of claim 8, wherein the buffer module includes multiple sub-buffers, wherein the sub-buffers enable the framing module to generate the plurality of frames independently from the rendering of the visualization.

10. The system of claim 8, wherein the buffer module is further operable to store the plurality of frames in sequential order as a storyboard object, wherein the storyboard object is operable to provide repeated playback of the morphing animation of the change.

11. A computing device for creating a morphing animation, comprising:
a processor; and
a memory storage including instructions, which when executed by the processor are operable to:
take an initial snapshot of a geometry comprising the visualization before the change;
after receiving a modification to the visualization, take an intermediate snapshot of an intermediate geometry comprising the visualization during the change
take a final snapshot of a final geometry comprising the visualization after the change;
based on the snapshots, create a merged geometry;
receiving a timing curve specifying a rate at which the merged geometry illustrates a change to the visualization;
specifying as well positional and non-positional properties of various elements at a given point in the duration of the animation, and wherein the plurality of frames differ from a frame corresponding to the initial snapshot; and
generate, based on the merged geometry, a plurality of frames renderable as static images to comprise the morphing animation.

12. The computing device of claim 11, wherein said instructions, which when executed by the processor are further operable to:
rendering the plurality of frames in the visualization, thereby providing the morphing animation of the change to the visualization.

13. The computing device of claim 11, wherein said instructions, which when executed by the processor are further operable to:
receive a Frames per Second, FPS, rate at which the morphing animation is rendered;
wherein the transitional states are determined according to the timing curve; and
wherein a number of the plurality of frames does not exceed a number based on the duration and the FPS rate.
